# FASCICULE DE BREVET EUROPEEN

(11) **EP 2 410 710 B1**
(45) Date de publication et mention de la délivrance du brevet: **19.03.2014**
(21) Numéro de dépôt: 10290412.5
(22) Date de dépôt: 20.07.2010
(51) Int. Cl.: H04L 29/06, H04L 12/00

(54) **Procédé de routage dans un réseau de distribution de contenu**
Routing-Verfahren in einem Datenverteilungsnetz
Routing method in a content-distribution network

(43) Date de publication de la demande: 25.01.2012
(73) Titulaire: Alcatel Lucent, 75007 Paris (FR)
(72) Inventeur: Aghasaryan, Armen, 91620 Nozay (FR); Kamga, Guy-Bertrand, 91620 Nozay (FR); Betge-Brezetz, Stéphane, 91620 Nozay (FR)
(74) Mandataire: El Manouni, Josiane

(56) Documents cités:
- EP-A1- 2 120 402
- US-A1- 2008 151 891
- Rajesh Krishnan: "09 O1.08-8493 SCONES: Secure Content-Oriented Networking for Exploring Space" 23 novembre 2009 (2009-11-23), pages 1-2, XP002608425 Extrait de l'Internet: URL:http://sbir.nasa.gov/SBIR/abstracts/09 /sbir/phase1/SBIR-09-1-O1.08-8493.html?sol icitationId=SBIR_09_P1 [extrait le 2010-11-04]
- Rajesh Krishnan: "09 O1.08-8493 SCONES: Secure Content-Oriented Networking for Exploring Space" 23 novembre 2009 (2009-11-23), pages 1-1, XP002608157 Extrait de l'Internet: URL:https://www.spacecomm.nasa.gov/spaceco mm/programs/technology/sbir/default.cfm?so rt=1&category=-1 [extrait le 2010-11-04]
- ALEX WUN ET AL: "A Policy Management Framework for Content-Based Publish/Subscribe Middleware" 26 novembre 2007 (2007-11-26), MIDDLEWARE 2007; [LECTURE NOTES IN COMPUTER SCIENCE], SPRINGER BERLIN HEIDELBERG, BERLIN, HEIDELBERG, PAGE(S) 368 - 388 , XP019083080 ISBN: 978-3-540-76777-0 * section 3.2 * * sections 4.1 et 4.2 * * page 381, quatre dernières lignes *
- KUNDU A ET AL: "A New Model for Secure Dissemination of XML Content" IEEE TRANSACTIONS ON SYSTEMS, MAN, AND CYBERNETICS: PART C:APPLICATIONS AND REVIEWS, IEEE SERVICE CENTER, PISCATAWAY, NJ, US, vol. 37, no. 3, 1 mai 2008 (2008-05-01), pages 292-301, XP011207759 ISSN: 1094-6977
- CARZANIGA A ET AL: "FORWARDING IN A CONTENT-BASED NETWORK" COMPUTER COMMUNICATION REVIEW, ACM, NEW YORK, NY, US, vol. 33, no. 4, 1 octobre 2003 (2003-10-01), pages 163-174, XP001224078 ISSN: 0146-4833
- COSTIN RAICIU ET AL: "Enabling Confidentiality in Content-Based Publish/Subscribe Infrastructures" SECURECOMM AND WORKSHOPS, 2006, IEEE, PI, 1 août 2006 (2006-08-01), pages 1-11, XP031087484 ISBN: 978-1-4244-0422-3

## Description

L'invention a trait au transport dans les réseaux.

L'invention concerne plus particulièrement la protection de la vie privée (*privacy*) lors du routage dans un réseau de distribution de contenu.

La protection de la vie privée présente quatre aspects : anonymat, pseudonymie, non-chaînabilité, non observabilité. L'anonymat assure l'impossibilité pour d'autres utilisateurs de déterminer le véritable nom de l'utilisateur associé à un sujet, une opération, un objet. La pseudonymie permet à l'utilisateur d'être tenu responsable de ses actes, tout en préservant l'anonymat. La non-chaînabilité assure l'impossibilité pour d'autres utilisateurs d'établir un lien entre différentes opérations effectuées par un même utilisateur. La non-observabilité assure l'impossibilité pour d'autres utilisateurs de déterminer si une opération est en cours.

De nombreuses utilisations des réseaux impliquent la transmission de données personnelles aux acteurs qui en ont besoin pour réaliser la tâche qui leur est confiée. C'est le cas, par exemple, du commerce électronique qui implique clients, marchands, services de livraison, établissements bancaires et fournisseurs d'accès internet. Chacun de ces acteurs a besoin d'une partie de l'information liée à l'achat. Ainsi par exemple, le marchand doit être assuré de la validité du moyen de paiement utilisé par le client mais n'a en principe pas besoin de connaître l'identité du client, la société de livraison doit connaître l'identité et l'adresse du destinataire mais n'a pas besoin de connaître l'identité de l'acheteur, l'établissement bancaire du client doit connaître les références du compte à créditer et le montant mais n'a pas à être informé de la nature des achats effectués.

Les techniques de protection de la vie privée sur Internet visent à assurer la protection des adresses IP (par exemple par une affectation dynamique des adresses DHCP, PPP, NAT, ou par routeurs d'anonymat MIX, Onion Routing, Crowds) et à permettre un accès anonyme à des services (par exemple par relais d'anonymat ou par serveur de pseudonymes). Les autorisations sur Internet fonctionnent conventionnellement sur un modèle client-serveur, le serveur accordant ou refusant des privilèges au client en fonction de son identité déclarée, le cas échéant vérifiée par des mécanismes d'authentification. Le serveur doit enregistrer des données personnelles pouvant servir de preuve en cas de litige et ces données peuvent être employées par exemple pour le profilage des clients.

Les réseaux de distribution de contenus CDN (*Content Distribution Networks*) assurent une dissémination des contenus pour les pousser vers les utilisateurs.

Divers CDN sont actuellement proposés, par exemple www.limelightnetworks.com,www.akamai.com,www.nanodatacenters.eu.

Les réseaux orientés contenu CCN (*Content Centric Networks*) permettent aux applications et à leurs utilisateurs d'accéder aux données indépendamment de leur localisation, étant entendu que ce n'est pas la localisation des utilisateurs qui est importante mais le contenu qu'ils désirent recevoir.

Pour une présentation des réseaux orientés contenu, on peut se reporter, par exemple, aux documents suivants : Carzanig et al, A routing scheme for content-based networking, Proc. of IEEE INFOCOM, 2004 *;* B. Ahlgren et al, Design considerations for a network of information, Proc. of ACM CoNEXT, 2008 *;* V. Jacobson et al, Networking named content, in Proc. of ACM CoNEXT, 2009 ; Project CCNx, http://www.ccnx.org/*.*

L'architecture des réseaux orientés contenu comporte par exemple un réseau de coeur à très haut débit et des réseaux d'accès. Le réseau de coeur comporte des routeurs à haut débit interconnectés et les émetteurs et destinataires de contenus ne font pas partie de ce réseau de coeur. Les réseaux d'accès local regroupent des utilisateurs et leur permettent d'accéder aux contenus. Ces réseaux locaux sont connectés au réseau de coeur par un routeur intermédiaire de contenu.

Plutôt que de connecter des hôtes distants comme le fait actuellement IP, un réseau orienté contenu CCN gère directement les éléments d'information que les utilisateurs veulent publier, récupérer, ou échanger.

Un exemple de routage dans un réseau orienté contenu est présenté dans le document EP 2 120 402 (Van Jacobsen et al). Dans cette conception antérieure, le routage est effectué uniquement en fonction des noms donnés aux contenus (*Name-Based Routing Policy*).Le nom donné aux contenus est persistant, une modification du contenu entraînant une modification du nom. Chaque unité d'information (*data chunk*) injectée dans le réseau est censée atteindre l'ensemble des noeuds, le routage étant basé contenu.

Un autre exemple de routage dans un réseau orienté contenu est présenté dans le document d'Alex Wun et Hans-Arno Jacobsen, "A policy Management Framework for Content-Based Publish/subscribe Middleware"

L'invention vise à fournir des moyens permettant au fournisseur ou au propriétaire du contenu de contrôler efficacement le routage dans un réseau de distribution de contenu CDN, en particulier mais non exclusivement dans un réseau orienté contenu CCN.

A cette fin, l'invention se rapporte, selon un premier aspect à un procédé de dissémination et de routage d'un contenu dans un réseau de distribution de contenus, ce procédé comprenant une étape d'association, par une application fournisseur, d'une enveloppe de règles d'accès et de conservation de ce contenu par les noeuds du réseau, une étape de création d'enveloppes de protection de la privacy des segments de fichiers correspondant à ce contenu, lesdites enveloppes de protection contenant des contraintes de privacy,notamment des contraintes de routage et de stockage, de ces segments de fichiers, et une étape d'injection de ces segments consécutifs de fichiers pour leur routage dans le réseau de distribution de contenus.

Avantageusement, le procédé comprend la mise à disposition pour au moins un noeud du réseau, d'une fonction d'interprétation des contraintes de privacy. En particulier, cette fonction d'interprétation contrôle la présence de droits, pour le propriétaire dudit contenu, d'imposer ses règles de protection, notamment contraintes de routage et de stockage, dudit contenu audit noeud.

Avantageusement, le procédé comprend la mise à disposition, pour au moins un noeud du réseau, d'une fonction de mémorisation des règles de routage des contenus disséminés.

Dans certaines mises en oeuvres, notamment lorsque le réseau est orienté contenu, le procédé comprend une étape de création d'un identifiant unique et persistant pour ledit contenu.

Dans certaines mises en oeuvre, le procédé comprend une étape de création d'une description dudit contenu, notamment par une étiquette XML.

Avantageusement, le procédé comprend l'injection dans le réseau de distribution de contenu d'une requête ou d'un profil d'intérêt d'au moins un utilisateur, la réception de la requête par un noeud du réseau pourvu d'un contenu satisfaisant ladite requête ou ledit profil, le routage de ce contenu vers un noeud d'extrémité du réseau au travers des noeuds acceptant les règles de routage contenues dans les enveloppes de protection.

Dans une mise en oeuvre particulière, l'injection de requête est effectuée dans un réseau orienté contenu CCN, cette requête (expression de volonté - *interest packet)* comportant au moins une information de profil utilisateur, par exemple une méta donnée telle qu'identifiant utilisateur, contexte ou but de la requête.

Dans certaines mises en oeuvre, la requête ou le profil d'intérêt, par exemple en provenance du terminal de l'utilisateur, est injecté dans un réseau de coeur par le noeud central d'un réseau local d'accès.

L'invention se rapporte, selon un deuxième aspect, à un réseau pour la mise en oeuvre du procédé présenté ci dessus, ce réseau étant avantageusement un réseau orienté contenu ou un réseau pair à pair.

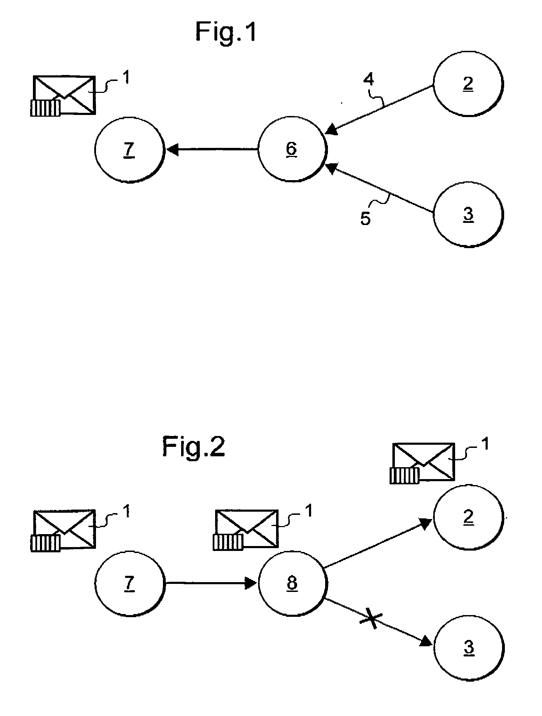

D'autres objets et avantages de l'invention apparaîtront à la lumière de la description faite ci-après de modes de réalisation actuellement préférés, en référence à la figure jointe. Dans la suite de cette description, le terme « utilisateur » est employé pour désigner un dispositif électronique, par exemple un terminal de communication fixe ou mobile.

Les données 1 comprennent trois parties : l'identifiant, le contenu et l'enveloppe.

Lorsque le réseau de distribution de contenus est un réseau orienté contenu CCN, l'identifiant est unique et persistant ainsi qu'il est connu en soi. L'unicité permet d'éviter le stockage et l'échange de doublons. Avantageusement, l'identifiant est formé d'un préfixe (par exemple le propriétaire des données) suivi d'un ou plusieurs suffixes. Avantageusement, au moins un suffixe correspond à la version des données.

A titre d'exemple, l'identifiant ALBL/CCN/connect/project/version1 est employé pour des données d'une version 1 d'un projet de routage dans un réseau orienté contenu, le propriétaire des données étant ALBL.

La persistance de l'identifiant est assurée par une modification de cet identifiant provoquée par une modification du contenu.

Par « contenu » on désigne ici des segments consécutifs de fichiers (*data chunks*) véhiculés entre les noeuds, ces fichiers étant de type audio, vidéo ou messages textuels, le routage s'effectuant à la granularité de ces segments.

L'enveloppe contient des informations décrivant le contenu et des contraintes de privacy.

Dans une mise en oeuvre, la description du contenu permet aux utilisateurs de chercher, découvrir et demander un contenu, elle peut contenir des mots clefs, le format du contenu, le format de compression, ou la taille des fichiers.

Les contraintes de privacy peuvent contenir :
- des contraintes de routage limitant les routeurs ou les domaines de réseau par lesquels le contenu peut être livré, selon l'opérateur réseau ou selon la zone géographique ou administrative ou encore selon les conditions de sécurité assurées ;
- des contraintes d'accès limitant les utilisateurs ayant droit à recevoir le contenu, selon les caractéristiques des utilisateurs comme leur profil, ou toute autre information présente dans la partie méta-donné de la requête (expression de volonté) ;
- des contraintes de stockage limitant la durée de stockage ou mise en cache du contenu dans un routeur ou d'un équipement d'un utilisateur.

A titre d'exemple, l'enveloppe contenant des informations décrivant le contenu et des contraintes de privacy est une étiquette au format XML (*eXtensible Markup Language*).

Dans une mise en oeuvre, le réseau de distribution de contenus est un réseau orienté contenu CCN et les contraintes de privacy sont insérées en extension des en têtes de paquets.

Les données émises par une source parviennent à un noeud d'un réseau de distribution de données CDN, par exemple réseau orienté contenu CCN. Les contraintes de routage permettent au routeur de vérifier si ces données peuvent être reçues, éventuellement mises en cache pendant un temps de vie TTL (*Time To Live*).

La durée de vie TTL affectée à chaque donnée lors de son injection dans le réseau permet de supprimer automatiquement dans les caches toutes les copies d'un document devenu obsolète. La durée de vie des avantageusement fixée par l'émetteur, sur la base d'une estimation du temps nécessaire pour que les données atteignent tout ou partie des utilisateurs intéressés, ou sur la base d'une estimation de la durée pendant laquelle les données injectées doivent être considérées comme pertinentes pour les utilisateurs, ou sur la base d'une estimation de la sensibilité de la donnée par rapport aux principes de privacy.

Les utilisateurs 2, 3 manifestent leur volonté de recevoir certains contenus, par exemple des vidéos. Cette volonté est par exemple une annonce, notamment périodique, d'une description d'un profil d'intérêts, Par exemple, le profil d'intérêt comprend le nom de contenu et éventuellement des mots clefs susceptibles d'être présents dans l'enveloppe des données.

Cette volonté est transmise (flèches 4, 5) à un noeud 6. Dans une mise en oeuvre, ce noeud 6 est un routeur central d'un réseau local d'accès, ce routeur central interconnectant le réseau local au réseau de coeur du CCN. Dans une autre mise en oeuvre, ce noeud 6 est un noeud du réseau de coeur du CCN.

La volonté des utilisateurs 2, 3 est propagée dans le réseau, en particulier dans le réseau de coeur du CCN et parvient à un noeud 7 contenant des données 1 dont les contenus correspondent aux volontés des utilisateurs 2, 3.

Le noeud 7 transmet alors les données (enveloppées) 1 au noeud 8 d'où lui est parvenue la requête. Le cas échéant, ce noeud 8 est le routeur central 6 recevant les demandes des utilisateurs 2, 3 aux contenus.

Le noeud 7 contenant les données 1 ne connaît pas les identités ou les profils des utilisateurs 2, 3.

Le noeud 7 ne reçoit qu'une seule requête en provenance du noeud 8, cette requête correspondant à la volonté de deux ou plus de deux utilisateurs. Cette diffusion multipoint orientée contenu est particulièrement avantageuse lorsque le réseau de coeur est à très haut débit, tous les contenus étant poussés vers toutes les extrémités du réseau. Les utilisateurs peuvent alors profiter des contenus comme s'ils étaient disponibles localement.

Les informations contenues dans les enveloppes sont entre autres les règles définissant un groupe d'utilisateurs autorisés pour ce contenu des données 1. Ainsi, le noeud 8 recevant les données 1 les transmets vers l'utilisateur 2 mais ne les transmets pas vers l'utilisateur 3. Le noeud 7 contenant les données 1 ne décide pas de l'accès des données 1 pour les utilisateurs 2, 3, cette décision étant prise par le noeud 8, prédécesseur direct des noeuds de destination des données 1.

Dans une mise en oeuvre, un service client assure pour les données 1, la création des enveloppes associées aux contenus.

Dans une mise en oeuvre, au moins une partie des noeuds du réseau, avantageusement les noeuds d'extrémité, est pourvu d'un module de contrôle des règles de protection de la vie privée des utilisateurs, ce module mesurant les droits pour chaque utilisateur ou groupe d'utilisateur de fixer ses règles de protection de la vie privée.

Dans le réseau de distribution de données, notamment dans le réseau CCN, les paquets transférés sont associés à des unités de données d'enveloppe. Avantageusement, chaque noeud du réseau conserve en mémoire la première transmission des données d'enveloppe provenant des noeuds immédiatement voisins et portant sur les différents paquets du même contenu (fichier ou flot de donnée). Ainsi, lorsque le noeud doit transmettre des données <X2, E2> dont l'enveloppe E2 est identique à celle E1 de données <X1, E1> déjà transmises, le noeud supprime l'enveloppe E2 et envoie les données <X2, ε> ε contenant la donnée avec son nom unique X2 et ne comportant pas de contrainte de privacy.

L'utilisateur fournisseur de contenus, notamment le propriétaire des contenus, dispose d'une application utilisateur pourvue d'une fonction de correspondance d'enveloppe (*Envelop Mapper*) assurant la création de segments de fichiers d'enveloppe pour le contenu des données à transporter par le réseau en correspondance avec les paramètres de privacy définis par l'utilisateur.

Les différentes parties d'un même contenu peuvent être associées avec différentes paramètres ou contraintes de privacy ; par exemple, certaines parties d'un document peuvent comporter des informations plus sensibles vis-à-vis de la protection de la privacy comme les noms ou les adresses d'individus que d'autres parties. Ces différentes parties seront par conséquent segmentées dans des enveloppes comportant différentes contraintes privacy; certaines demandeurs du document pourront recevoir l'intégralité du document tandis que d'autres n'en recevront qu'une partie.

A chaque noeud du réseau est fournie une fonction d'interprétation (*policy interpretation*) contrôlant la présence de droits, pour le propriétaire des données, d'imposer ses règles de protection, en particulier contraintes de routage, à ce noeud. En l'absence de cette fonction d'interprétation, les données sont le cas échéant rejetées par le noeud. Lorsque cette fonction d'interprétation est présente et que les droits du propriétaire des données ne permettent pas d'imposer des règles de protection au noeud considéré, les données sont avantageusement rejetées par le noeud. Lorsque cette fonction d'interprétation est présente et que les droits du propriétaire des données permettent d'imposer des règles de protection de ce propriétaire, les données traversent le noeud et sont le cas échéant stockées en cache pendant la durée déterminée par le propriétaire des données.

Avantageusement, à chaque noeud de réseau est fournie une fonction de stockage des règles de protection. Ce stockage permet d'appliquer ces règles pendant une durée déterminée, avantageusement la durée de vie TTL prévue pour les données.

Avantageusement, chaque noeud conserve en mémoire les décisions de routage, en particulier les décisions de refus de transmission de données vers tous les noeuds voisins.

Implémentée dans la couche de transport et non la couche d'application, l'invention peut être mise en place dans les réseaux CDN et CCN ou la distribution de contenus en *peer to peer.*

L'invention renforce la protection des données personnelles (profil d'intérêt d'une part et données personnelles d'autre part), lors de l'utilisation de réseaux orientés objet CNN. Le routage est effectué en tenant compte de paramètres fixés par l'émetteur, notamment le propriétaire des données, qui peut exclure pour certains noeuds l'accès aux données à router, en fonction de la politique de sécurité connue ou supposée pour les destinataires.

## Revendications

1. Procédé de dissémination et de routage d'un contenu pour un réseau de distribution de contenus tenant compte des besoins de protection de la vie privée, ce procédé comprenant une étape d'association au dit contenu, par une application fournisseur, d'une enveloppe de règles d'accès, de routage et de stockage dudit contenu par les noeuds du réseau, une étape de création, par un service client, d'enveloppes de protection de la vie privée des segments consécutifs de fichiers correspondant à ce contenu, lesdites enveloppes de protection de la vie privée contenant des contraintes d'accès, de routage et de stockage de ces segments consécutifs de fichiers, une étape d'injection, par une source du contenu, de ces segments consécutifs de fichiers et des enveloppes de protection de la privacy contenant les contraintes d'accès, de routage et de stockage de ces segments consécutifs de fichiers pour leur routage dans le réseau de distribution de contenus, et une étape de la mise à disposition, pour au moins un noeud du réseau, d'une fonction de mémorisation des règles de routage de ces segments consécutifs de fichiers.

2. Procédé selon la revendication 1, **caractérisé en ce qu'**il comprend la mise à disposition pour au moins un noeud du réseau, d'une fonction d'interprétation des contraintes de routage et de stockage.

3. Procédé selon la revendication 2, **caractérisé en ce que** la fonction d'interprétation contrôle la présence de droits, pour le propriétaire dudit contenu, d'imposer ses règles de protection, notamment les contraintes de routage, dudit contenu audit noeud.

4. Procédé selon l'une quelconque des revendications 1 à 3, **caractérisé en ce qu'**il comprend une étape de création d'un identifiant unique et persistant pour ledit contenu.

5. Procédé selon l'une quelconque des revendications 1 à 4, **caractérisé en ce qu'**il comprend une étape de création d'une description dudit contenu par une étiquette XML.

6. Procédé selon l'une quelconque des revendications 1 à 5, **caractérisé en ce qu'**il comprend l'injection dans le réseau d'une requête avec un profil d'intérêt d'au moins un utilisateur, la réception de la requête par un noeud du réseau pourvu d'un contenu satisfaisant ladite requête ou ledit profil, le routage de ce contenu vers un noeud d'extrémité du réseau au travers des noeuds acceptant les règles de routage contenues dans les enveloppes de protection de la vie privée des segments consécutifs de fichiers.

7. Procédé selon la revendication 6, **caractérisé en ce que** la requête ou le profil d'intérêt est injecté dans un réseau de coeur par le noeud central d'un réseau local d'accès ou par un terminal d'utilisateur.

8. Procédé selon l'une quelconque des revendications 1 à 7, pour un réseau étant un réseau orienté contenu ou un réseau pair à pair.

## Patentansprüche

1. Verfahren zur Verbreitung und zum Routen eines Inhalts für ein inhaltsverteilendes Netzwerk unter Berücksichtigung der Erfordernisse des Datenschutzes, wobei dieses Verfahren einen Schritt des Verknüpfens, durch eine Anbieteranwendung, eines Satzes von Regeln für den Zugriff auf den besagten Inhalt und dessen Routen und Speichern durch Knoten des Netzwerks mit dem besagten Inhalt, einen Schritt des Erstellens, durch einen Kundendienst, von Sätzen für den Datenschutz der aufeinanderfolgenden Dateisegmente, welche diesem Inhalt entsprechen, wobei die besagten Datenschutzsätze Zugriffs-, Routing- und Speicherungsbeschränkungen für diese aufeinanderfolgenden Dateisegmente enthalten, einen Schritt des Einspeisens, durch eine Quelle des Inhalts, von aufeinanderfolgenden Dateisegmenten und der Datenschutzsätze, welche die Zugriffs-, Routing und Speicherungsbeschränkungen für diese aufeinanderfolgenden Dateisegmente enthalten, für deren Routing in dem inhaltsverteilenden Netzwerk, und einen Schritt des Bereitstellens, für mindestens einen Knoten des Netzwerks, einer Speicherfunktion für die Routing-Regeln dieser aufeinanderfolgenden Dateisegmente umfasst.

2. Verfahren nach Anspruch 1, **dadurch gekennzeichnet, dass** es die Bereitstellung, für mindestens einen Knoten des Netzwerks, einer Funktion für die Auswertung des Routing- und Speicherungsbeschränkungen umfasst.

3. Verfahren nach Anspruch 2, **dadurch gekennzeichnet, dass** die Auswertungsfunktion das Bestehen von Rechten, für den Eigentümer des besagten Inhalts, zur Durchsetzung seiner Schutzregeln, insbesondere der Routing-Beschränkungen für den besagten Inhalt, gegenüber dem besagten Knoten kontrolliert.

4. Verfahren nach einem beliebigen der Ansprüche 1 bis 3, **dadurch gekennzeichnet, dass** es einen Schritt des Erstellens einer eindeutigen und fortdauernden Kennung für den besagten Inhalt umfasst.

5. Verfahren nach einem beliebigen der Ansprüche 1 bis 4, **dadurch gekennzeichnet, dass** es einen Schritt des Erstellens einer Beschreibung des besagten Inhalts mittels eines XML-Etiketts umfasst.

6. Verfahren nach einem beliebigen der Ansprüche 1 bis 5, **dadurch gekennzeichnet, dass** es das Einspeisen einer Anforderung mit einem Interessenprofil mindestens eines Nutzers in das Netzwerk, den Empfang der Anforderung an einem Knoten des Netzwerks, welcher über einen die besagte Anforderung oder das besagte Profil erfüllenden Inhalt verfügt, das Routen dieses Inhalts über Knoten, welche die in den Datenschutzsätzen für die aufeinanderfolgenden Dateisegmente enthaltenen Routing-Regeln akzeptieren, an einen Endknoten des Netzwerks umfasst.

7. Verfahren nach Anspruch 6, **dadurch gekennzeichnet, dass** die Anforderung oder das Interessenprofil durch den zentralen Knoten eines lokalen Zugangsnetzwerks oder durch ein Benutzerendgerät in ein Kernnetzwerk eingespeist wird.

8. Verfahren nach einem beliebigen der Ansprüche 1 bis 7 für ein Netzwerk, welches ein inhaltsorientiertes Netzwerk oder ein Peer-to-Peer-Netzwerk ist.

## Claims

1. A method for disseminating and routing a piece of content for a content distribution network that takes into account privacy protection needs, which method comprises a step of a supplier application associating said content with an envelope of rules for the accessing, routing, and storing of said content by the nodes of the network, a step of a customer service creating said privacy protection envelopes of consecutive file segments corresponding to that content, said privacy protection envelopes containing access, routing, and storage restrictions of those consecutive file segments, a step of a content source injecting those consecutive file segments and privacy protection envelopes containing access, routing, and storage restrictions of those consecutive file segments in order to route them within the content distribution network, and a step of providing at least one node of the network with a function for saving the routing rules of those consecutive file segments.

2. A method according to claim 1, **characterized in that** it comprises providing at least one node of the network with a function to interpret the routing and storage restrictions.

3. A method according to claim 2, **characterized in that** the interpretation function checks whether there are rights for the owner of said content to impose its own protection rules for said content, particularly routing restrictions, onto said node.

4. A method according to any one of the claims 1 to 3, **characterized in that** it comprises a step of creating a single, persistent identifier for said content.

5. A method according to any one of the claims 1 to 4, **characterized in that** it comprises a step of an XML tag creating a description of said content.

6. A method according to any one of the claims 1 to 5, **characterized in that** it comprises the injection into the network of a request with an interest profile of at least one user, the receipt of the request by a node of the network having content that fulfills said request, the routing of that content to an end node of the network through nodes that accept the routing rules contained in the privacy protection envelopes of consecutive file segments.

7. A method according to claim 6, **characterized in that** the request or interest profile is injected into a core network by the central node of a local access network or by a user terminal.

8. A method according to any one of the claims 1 to 7, for a network being a content-oriented network or a peer-to-peer network.
